# EUROPEAN PATENT SPECIFICATION

(11) **EP 1 921 627 B1**
(45) Date of publication and mention of the grant of the patent: **17.06.2009**
(21) Application number: 07254126.1
(22) Date of filing: 17.10.2007
(51) Int. Cl.: G11B 27/034, G11B 27/34

(54) **Apparatus, method, and program to automatically create a slide show at regular time intervals**
Vorrichtung, Verfahren und Programm zur automatischen Erstellung einer Diaschau in regelmässigen Zeitabschnitten
Appareil, procédé et programme de création automatique d'un diaporama à intervalles réguliers

(30) Priority: 09.11.2006 JP 2006304505
(43) Date of publication of application: 14.05.2008
(73) Proprietor: Sony Corporation, Minato-ku Tokyo 108-0075 (JP)
(72) Inventor: Masham, Keiko, Tokyo 108-0075 (JP)
(74) Representative: Keston, Susan Elizabeth

(56) References cited:
- EP-A- 1 422 668
- WO-A-03/102914
- US-A1- 2003 231 202
- TOTALLY HIP SOFTWARE ET AL: "Liveslideshow User's Manual" INTERNET CITATION, [Online] XP002386607 Retrieved from the Internet: URL:http://stagedoor.totallyhip.com/direct .asp?TOPIC=Resource&RESOURCE_ID =8&ITEM_ID=3> [retrieved on 2006-06-20]

## Description

The present invention relates to an information processing apparatus, an information processing method, and a program. More particularly, the invention relates to an information processing apparatus, an information processing method, and a program for informing a user that moving picture contents have been automatically created.

Many apparatuses capable of handling still-frame pictures taken by digital cameras have what is known as a slide-show facility for displaying the still pictures one after another at predetermined intervals (e.g., of one second). Some of these apparatuses allow the user to select songs as background music (BGM) to be played during slide show reproduction.

The slide show facility combined with selectable BGM offerings enables the user to watch still-frame pictures being displayed one by one while listening to preferred songs.

A Non-Patent Document called "DoCoMo Mova P506iC Photo Cocktail" available on the Internet at <http://Panasonic.jp/mobile/p506ic/photo/index.html> discloses techniques not just for displaying the still-frame pictures as taken (by and into the apparatus) but for presenting them one after another after processed with various effects.

If the apparatus equipped with the above-mentioned slide shown facility is a picture recording apparatus such as a hard disk recorder, then the primary functionality of the apparatus is its recording facility. The slide show facility is something thrown in that only plays a minor part and is seldom utilized by the user. This facility with its potential attractiveness deserves to receive more attention from the user.

If information about a recorded TV program content is presented to the user in list form together with an unexpected indication that there already exits a corresponding slide show content created automatically by the slide show facility, then the user will be much more likely to select and watch that slide show content than before. This type of feature is expected to give the user a taste of what the slide show facility can do.

WO 03/102914 A discloses a method and apparatus for effecting a presentation.

The present invention has been made in view of the above circumstances.

Various respective aspects and features of the invention are defined in the appended claims.

Embodiments of the present invention provide arrangements for informing the user that moving picture contents have been automatically created.

In carrying out the present invention and according to one embodiment thereof, there is provided an information processing apparatus including: selection means for managing a plurality of themes each associating a song with effects for a moving picture content, the selection means being configured to further select one of a plurality of folders each holding a plurality of still-frame pictures while concurrently selecting one of the themes at least at one of a plurality of timings established per day; creation means for creating a moving picture content to be displayed consecutively as the still-frame pictures from the folder selected by the selection means and accompanied by the effects and the song associated with the theme also selected by the selection means, the selected song serving as background music to be played during the display; recording means for recording the moving picture content created by the creation means along with other moving picture contents; and a display control means for displaying information including an icon indicating that the moving picture content is created automatically, the icon being part of the information in list form about the moving picture contents created by the creation means and recorded by the recording means.

Preferably, with the information processing apparatus placed in a standby state, the selection means is configured to select one of the plurality of themes and one of the plurality of folders at one of the plurality of timings.

Preferably, if the recording means is set to record a predetermined number of the moving picture contents created by the creation means up to the preceding day, then the recording means is configured to overwrite the oldest of the recorded moving picture contents with the moving picture content created anew by the creation means.

According to another embodiment of the present invention, there is provided an information processing method as well as a program including the steps of: managing a plurality of themes each associating a song with effects for a moving picture content, the managing step further selecting one of a plurality of folders each holding a plurality of still-frame pictures while concurrently selecting one of the themes at least at one of a plurality of timings established per day; creating a moving picture content to be displayed consecutively as the still-frame pictures from the selected folder and accompanied by the effects and the song associated with the selected theme, the selected song serving as background music to be played during the display; recording the moving picture content created in the creating step along with other moving picture contents; and displaying information including an icon indicating that the moving picture content is created automatically, the icon being part of the information in list form about the moving picture contents created in the creating step and recorded in the recording step.

According to embodiments of the present invention, as outlined above, a plurality of themes each associating a song with effects for a moving picture content are managed. One of a plurality of folders each holding a plurality of still-frame pictures is selected while one of the themes is concurrently selected at least at one of a plurality of timings established per day. A moving picture content is created in such a manner as to be displayed consecutively as the still-frame pictures from the selected folder and accompanied by the effects and the song associated with the selected theme, the selected song serving as background music to be played during the display. The moving picture content thus created is recorded along with other moving picture contents. Information is then displayed including an icon indicating that the moving picture content is created automatically, the icon being part of the information in list form about the moving picture contents created and recorded so far.

A major feature of the inventive arrangements is the capability of informing the user that moving picture contents have been created automatically.

Embodiments of the invention will now be described with reference to the accompanying drawings, throughout which like parts are referred to by like references, and in which:
Fig. 1 is a schematic view showing a picture recording apparatus which embodies the present invention and a TV set connected to the picture recording apparatus by cable;
Fig. 2 is a schematic view showing a typical theme;
Fig. 3 is a block diagram showing a typical structure of the picture recording apparatus;
Fig. 4 is a block diagram showing a typical functional structure of the picture recording apparatus;
Fig. 5 is a flowchart of steps constituting a photo movie creating process performed by the picture recording apparatus;
Fig. 6 is flowchart of steps constituting a photo movie reproducing process performed by the picture recording apparatus;
Fig. 7 is a schematic view showing a typical title list; and
Fig. 8 is a schematic view showing another typical title list.

What is described below as the preferred embodiments of the present invention with reference to the accompanying drawings corresponds to the appended claims as follows: the description of the preferred embodiments basically provides specific examples supporting what is claimed.

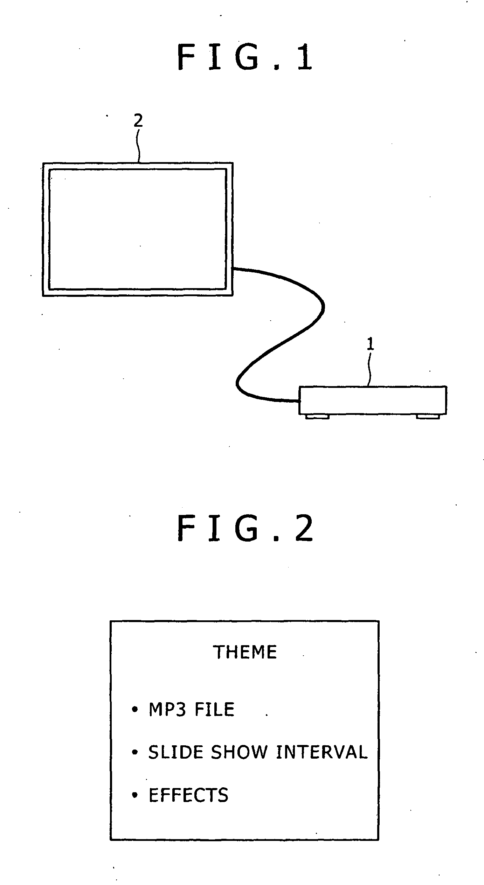

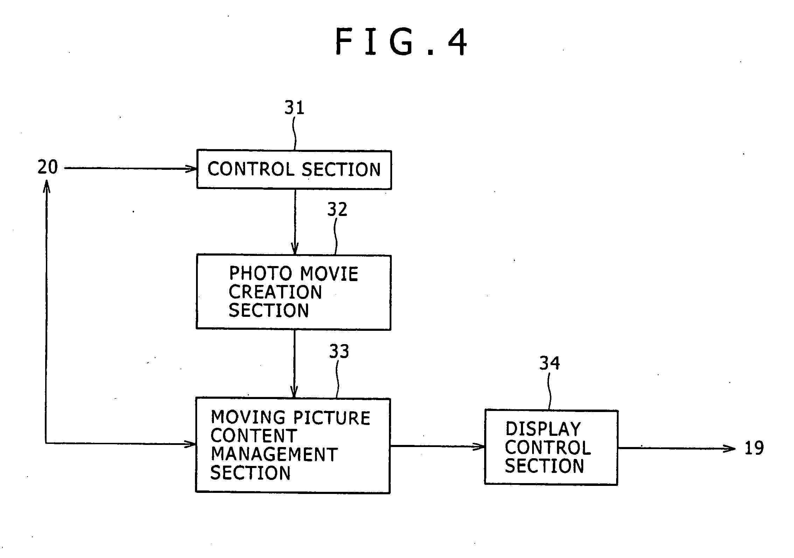

One embodiment of the present invention is an information processing apparatus (e.g., picture recording apparatus 1 in Fig. 1) including: selection means (e.g., control section 31 in Fig. 4) for managing a plurality of themes each associating a song with effects for a moving picture content, the selection means further selecting one of a plurality of folders each holding a plurality of still-frame pictures while concurrently selecting one of the themes at least at one of a plurality of timings established per day; creation means (e.g., photo movie creation section 32 in Fig. 4) for creating a moving picture content to be displayed consecutively as the still-frame pictures from the folder selected by the selection means and accompanied by the effects and the song associated with the theme also selected by the selection means, the selected song serving as background music to be played during the display; recording means (e.g., moving picture content management section 33 in Fig. 4) for recording the moving picture content created by the creation means along with other moving picture contents; and display control means (e.g., display control section 34 in Fig. 4) for displaying information including an icon indicating that the moving picture content is created automatically, the icon being part of the information in list form about the moving picture contents created by the creation means and recorded by the recording means.

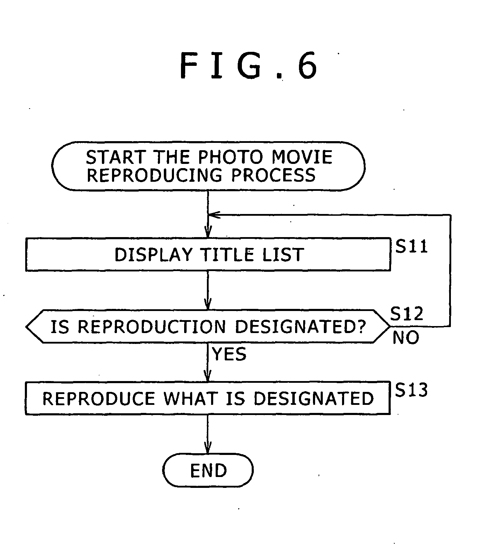

Another embodiment of the present invention is an information processing method as well as a program including the steps of: managing a plurality of themes each associating a song with effects for a moving picture content, the managing step further selecting one of a plurality of folders each holding a plurality of still-frame pictures while concurrently selecting one of the themes at least at one of a plurality of timings established per day; creating a moving picture content to be displayed consecutively as the still-frame pictures from the selected folder and accompanied by the effects and the song associated with the selected theme, the selected song serving as background music to be played during the display; recording the moving picture content created in the creating step along with other moving picture contents; and displaying (e.g., in step S11 of Fig. 6) information including an icon indicating that the moving picture content is created automatically, the icon being part of the information in list form about the moving picture contents created in the creating step and recorded in the recording step.

Preferred embodiments of the present invention will now be described in reference to the accompanying drawings. Fig. 1 is a schematic view showing a picture recording apparatus 1 which embodies the present invention and is connected to a TV set 2 by cable.

The picture recording apparatus 1 is capable of recording TV programs such as those provided by digital TV broadcasts. The data of the recorded programs is written to a hard disk incorporated in the picture recording apparatus 1.

The picture recording apparatus 1 is also capable of writing still-frame pictures taken illustratively by digital cameras to the hard disk by way of a memory card or the like, and of causing the TV set 2 to display the pictures thus recorded. Still-frame pictures may be displayed manually or automatically (without user intervention). That is, still-frame picture files may be selected one by one by the user for display, or still-frame pictures may be displayed consecutively together with various effects in what is known as a slide show. A song or songs may be output as background music while the slide show is in progress.

The picture recording apparatus 1 creates contents such that each will be displayed as a series of still-frame pictures in a slide show format accompanied by background music. Each content thus created is managed as a moving picture content in association with a corresponding recorded TV program. In the ensuing description, the moving picture contents to be reproduced each as a series of still-frame pictures in slide show form accompanied by background music will be referred to as photo movies.

A photo movie is created on the basis of a theme that associates a folder holding a predetermined number of still-frame pictures with detailed effects and a song. Fig. 2 is a schematic view showing a typical theme.

The picture recording apparatus 1 offers a plurality of themes such as "Natural," "Monochrome," and "Beautiful Days." Each of the themes associates an MP3 (MPEG Audio Player-3) file with a slide show interval and effects.

The MP3 file holds data constituting the song to be output as background music during the display of still-frame pictures. The slide show interval represents a unit of time at intervals of which still-frame pictures are displayed one by one. The effects specify what kinds of effects are to be provided on the still-frame pictures, such as picture display timings, fade-in/fade-out timings, scale-up/scale-down, rotation, and direction of picture movement during display.

Different themes associate different MP3 files with different slide show intervals and different effects. The same still-frame pictures can be arranged into moving picture contents that may be viewed differently depending on the selected theme.

A photo movie is created when the user selects one of the folders holding still-frame pictures recorded on the hard disk and designates creation of the photo movie by operating a remote controller or the like. For example, the user may select a given folder, the selection calling up a menu. In the menu, the user may designate creation of a photo movie, the designation causing a list of themes to appear. Selecting one of the themes from the list causes the photo movie to be created based on the selected theme and on the still-frame pictures held in the folder selected earlier.

More specifically, each of the still-frame pictures in the folder is subjected to the effects associated with the user-selected theme. The still-frame pictures are rearranged for display in a suitably timed manner as per the slide show interval of the theme and accompanied by the song associated with the theme. The photo movie thus created is written to the hard disk and reproduced at an appropriate timing.

The creation of a photo movie is also started at a predetermined timing when the picture recording apparatus 1 is switched off and placed in a standby state.

Suppose that a plurality of times of day (e.g., 2 a.m. and 4 a.m.) are set on the picture recording apparatus 2 and that conditions for creating a photo movie at any one of these times of day are met. In that case, the picture recording apparatus 1 automatically creates the photo movie at the appropriate timing using the applicable still-frame pictures recorded on the hard disk, and writes the created photo movie to the hard disk. Illustratively, a folder in which to place the still-frame pictures and a theme may be randomly selected, and a photo movie may be created on the basis of the selected folder and theme.

The fact that the photo movie has been automatically created is presented to the user who is operating the picture recording apparatus 1. As will be discussed later in detail, a title list serving as a screen for presenting information in list form about moving picture contents displays information about all moving picture contents recorded on the picture recording apparatus 1 along with recorded TV programs. As part of the information in the title list, a photo movie information display field displays icons each representing an automatically created photo movie in addition to the listed titles and reproduction times of the photo movies.

A photo movie is automatically created illustratively in the night when the user does not utilize the picture recording apparatus 1. Next time the user activates the picture recording apparatus 1, the user is presented with a display indicating that the photo movie has been created automatically. By designating reproduction, the user can enjoy the photo movie thus presented.

In this manner, the photo movie creation facility often considered a subordinate function of the picture recording apparatus 1 can be made to appeal its attractiveness to the user. Users may then be tempted to use this facility on their own initiative.

It is also possible to offer sample photo movies using still-frame pictures prepared by the manufacturer during the manufacturing stage of the apparatus. This feature would also inform the user of the existence and availability of the photo movie creation facility. However, such offerings are not as big a draw for the user as the photo movies created using the still-frame pictures taken by the user.

For example, the folder names such as "Field Day" and "Wedding" that were set to the folders by the user upon acquisition of still-frame pictures into the picture recording apparatus may be used unchanged as photo movie titles. When these movie titles are presented in the title list along with the titles of the recorded TV programs, the user may readily proceed to reproduce the presented photo movies. A photo movie with the same name as a user-selected folder name, created automatically, can be a surprise for the user who may well be tempted to reproduce the photo movie.

How a photo movie is created and how it is reproduced by the picture recording apparatus 1 will be discussed later in more detail with reference to the accompanying flowcharts.

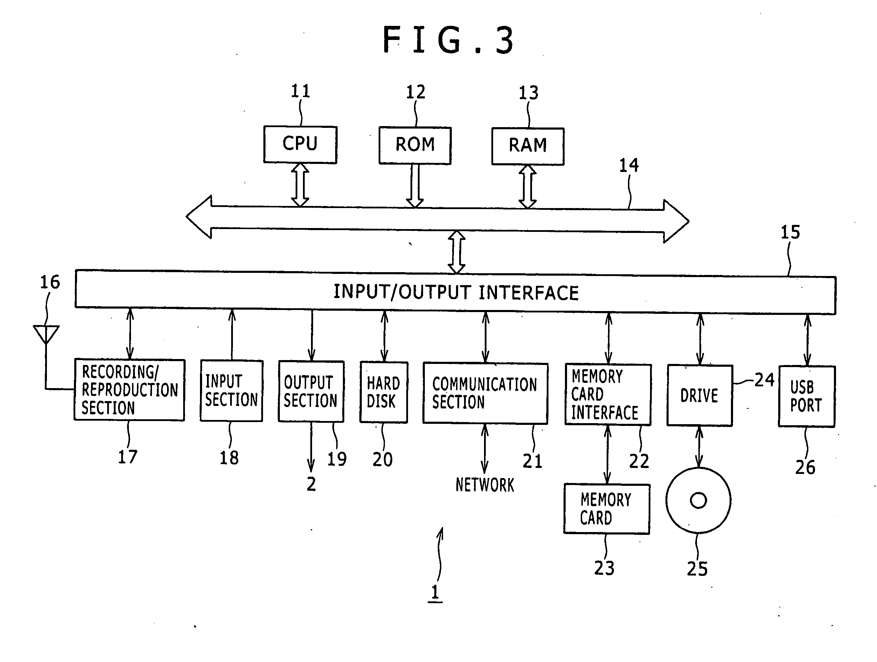

Fig. 3 is a block diagram showing a typical structure of the picture recording apparatus 1. A CPU (central processing unit) 11 performs various processes in accordance with programs held in a ROM (read only memory) 12 or according to programs loaded from a hard disk 20 into a RAM (random access memory) 13. The RAM 13 further accommodates necessary data for the CPU 11 in carrying out its processing.

The CPU 11, ROM 12, and RAM 13 are interconnected by a bus 14. An input/output interface 15 is also connected to the bus 14.

The input/output interface 15 is connected with a recording/reproduction section 17, an input section 18, an output section 19, the hard disk 20, a communication section 21, a memory card interface 22, a drive 24, and a USB (Universal Serial Bus) port 26.

The recording/reproduction section 17 compresses in MPEG-2 (Moving Picture Experts Group Phase 2) format the data constituting the TV programs acquired from signals captured by an antenna 16. The moving picture contents thus compressed are forwarded to the hard disk 20 via the input/output interface 15 and recorded to the hard disk 20.

The recording/reproduction section 17 further expands the moving picture contents retrieved from the hard disk 20 and sends the expanded contents through the output section 19 to the TV set 2. Given the contents, the TV set 2 is caused to reproduce pictures of the TV programs or photo movies (i.e., slide show of still-frame pictures). The recording/reproduction section 17 also reproduces the TV program audio or the songs accompanying the still-frame pictures to be displayed. The reproduced audio or songs are output from the TV set 2 by way of the output section 19.

The input section 18 may typically include an infrared receiver that receives signals from the remote controller, not shown. The input section 18 then forwards to the CPU 11 information representative of the user's operations on the remote controller.

The output section 19 is supplied with data via the input/output interface 15. Based on the supplied data, the output section 19 causes the TV set 2 to output pictures and sounds.

The hard disk 20 accommodates such records as moving picture contents obtained by the recording/reproduction section 17, photo movies prepared manually by the user or created automatically at preset timings, still-frame pictures acquired from a memory card 23 through the memory card interface 22, and still-frame pictures obtained from a digital camera by way of the USB port 26. The hard disk 20 also records MP3 files associated with the themes for use in creating photo movies.

The communication section 21 conducts communications over a network. The moving picture contents acquired through the communication section 21 may be written to the hard disk 20.

The memory card interface 22 serves to read still-frame pictures and other data from the memory card 23 attached to a memory card slot. The data thus acquired is recorded to the hard disk 20.

The drive 24 serves to drive a loaded optical disk 25 such as DVD (Digital Versatile Disk) and to retrieve data from the disk 25. The drive 24 may also write data to a writable optical disk 25.

The USB port 26 permits communication with an external apparatus such as a digital camera through a USB cable in order to obtain still-frame pictures. The still-frame pictures thus acquired are written to the hard disk 20.

Fig. 4 is a block diagram showing a typical functional structure of the picture recording apparatus 1. At least part of the functional sections shown in Fig. 4 is implemented by the CPU 11 in Fig. 3 carrying out relevant programs. As illustrated in Fig. 4, the picture recording apparatus 1 has a control section 31, a photo movie creation section 32, a moving picture content management section 33, and a display control section 34 implemented therein.

The control section 31 controls the creation of photo movies by the photo movie creation section 32. Illustratively, when the user selects a folder and a theme, the control section 31 reads from the hard disk 20 the still-frame pictures held in the selected folder and the MP3 file associated with the selected theme. The control section 31 proceeds to output the retrieved still-frame pictures and MP3 file to the photo movie creation section 32 together with the slide show interval and detailed effects associated with the selected theme.

When a predetermined time of day (e.g., 2 a.m. or 4 a.m.) is reached, the control section 31 checks to determine whether conditions for creating a photo movie are met. If the conditions are found to be met, then the control section 31 may read from the hard disk 20 the still-frame pictures kept in a randomly selected folder and the MP3 file associated with a randomly selected theme. The control section 31 may then cause the photo movie creation section 32 to create a photo movie based on the retrieved data. Information about the slide show interval and detailed effects associated with the randomly selected theme is also supplied to the photo movie creation section 32 along with the still-frame pictures and MP3 file.

The conditions for creating a photo movie may typically include the following:
- Is the power supply switched off to put the picture recording apparatus 1 in a standby state?
- Is the facility for automatic photo movie creation turned on?
- Are still-frame pictures in a predetermined format such as JPEG (Joint Photographic Expert Group) recorded on the hard disk 20?
- Does unattended recording based on reservations remain inactive?
- Is free space available on the hard disk 20?

It follows that no photo movie will be created automatically if the picture recording apparatus 1 is switched on, is reproducing a recorded TV program, or is carrying out unattended recorded according to previous reservations. Needless to say, if power supply to the picture recording apparatus 1 is completely shut off, then nothing takes place including the creation of a photo movie.

The picture recording apparatus 1 is set to create one photo movie per day. If the time to create a photo movie is set for 2 and 4 a.m. as mentioned above and if a photo movie was already created at 2 a.m., then the control section 31 prevents the photo movie creation section 32 from creating another photo movie at 4 a.m. on the same day.

The photo movie creation section 32 subjects each of the still-frame pictures coming from the control section 31 to the effects designated by the information supplied by the section 31. After rearranging the still-frame pictures for display in a suitably timed manner, the photo movie creation section 32 supplements the processed pictures with MP3 file data coming from the control section 31, thereby creating a photo movie. The created photo movie is sent from the photo movie creation section 32 to the moving picture content management section 33.

The moving picture content management section 33 manages the moving picture contents recorded on the hard disk 20. In operation, the moving picture content management section 33 writes to the hard disk 20 each photo movie supplied by the photo movie creation section 32, retrieves the user-selected TV program or photo movie from among the moving picture contents recorded on the hard disk 20, and outputs what is retrieved to the display control section 34.

If title list display is designated, then the moving picture content management section 33 supplies the display control section 34 with the information about the moving picture contents recorded on the hard disk 20. The information fed to the display control section 34 includes the titles of recorded TV programs, their recorded dates and times, and their reproduction times; as well as the titles of photo movies, their recorded dates and times, and their reproduction times.

The display control section 34 reproduces the moving picture content coming from the moving picture content management section 33 and causes the TV set 2 to output the reproduced pictures and sounds by way of the output section 19. Given the information for title list display from the moving picture content management section 33, the display control section 34 causes the TV set 2 to display the title list based on the supplied information.

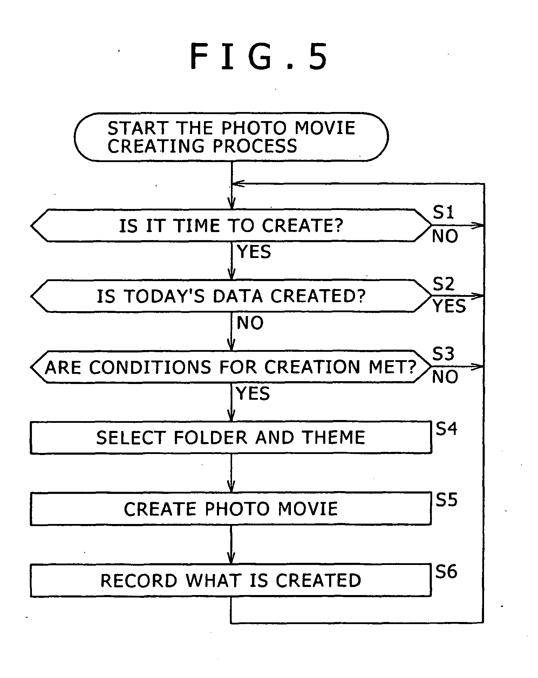

What follows is a description of typical processes carried out by the picture recording apparatus 1 of the above-described structure. Described first in reference to the flowchart of Fig. 5 is a typical photo movie creating process performed by the picture recording apparatus 1. This is a process carried out not manually by the user but automatically by the apparatus in the night or in a suitably timed manner. It is assumed here that the time to create a photo movie automatically is set for 2 and 4 a.m.

In step S1, the control section 31 checks to determine whether the time to create a photo movie (2 or 4 a.m.) is reached. The control section 31 waits until the time for photo movie creation is reached.

If in step S1 one of the timings for photo movie creation is found to be reached, then control is passed on to step S2. In step S2, the control section 31 checks to determine whether today's photo movie content has already been created.

If in step S2 today's content is found to have been created already, then control is returned to step S 1 and the subsequent steps are repeated by the control section 31. The picture recording apparatus 1 is set to create one photo movie per day. Thus if one photo movie was already created at 2 a.m., then a check at 4 a.m. reveals that today's content has already been created.

If in step S2 today's photo movie is not found to be created yet, then step S3 is reached. In step S3, the control section 31 checks to determine whether the above-mentioned conditions for photo movie creation are met.

If in step S3 the conditions for photo movie creation are not found to be met, then control is returned to step S 1 and the subsequent steps are repeated by the control section 31.

If in step S3 the conditions for photo movie creation are found to be met, then step S4 is reached. In step S4, the control section 31 selects the folder and theme for use in creating a photo movie. The still-frame pictures held in the folder selected by the control section 31 are read from the hard disk 20 along with the MP3 file associated with the selected theme. The still-frame pictures and MP3 file are output to the photo movie creation section 32 together with the information designating the slide show interval and detailed effects.

In step S5, the photo movie creation section 32 creates the photo movie based on the information coming from the control section 31. As the title of the created photo movie, the photo movie creation section 32 establishes the same folder name attached to the folder selected by the control section 31. The photo movie creation section 32 outputs the photo movie thus created to the moving picture content management section 33.

In step S6, the moving picture content management section 33 writes to the hard disk 20 the photo movie created by the photo movie creation section 32. This terminates the photo movie creating process.

Illustratively, the hard disk 20 of the picture recording apparatus 1 may be set to accommodate a total of three automatically created photo movies (i.e., three days' contents) except for those photo movies protected against erasure by the user. Where three days' photo movies were automatically created up to the preceding day, the moving picture content management section 33 overwrites the oldest of these recorded photo movies with today's photo movie newly created by the photo movie creation section 32.

Described below in reference to the flowchart of Fig. 6 is a typical photo movie reproducing process performed by the picture recording apparatus 1. This process is started when the user designates title list display. Designating title list display designated prompts the moving picture content management section 33 to supply the display control section 34 with the information about the moving picture contents recorded on the hard disk 20.

In step S11, the display control section 34 causes the TV set 2 to display the title list based on the information supplied from the moving picture content management section 33.

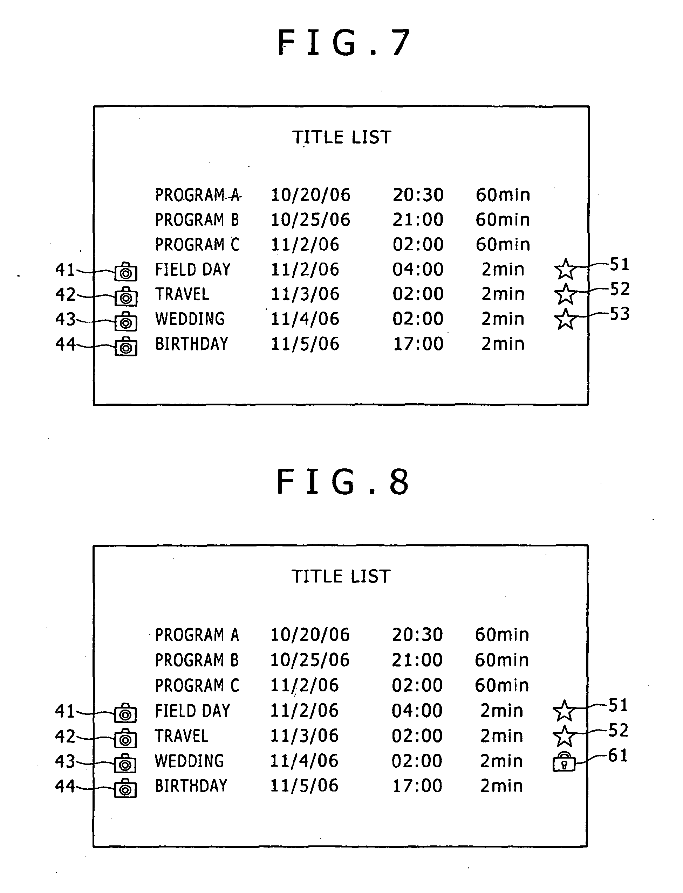

Fig. 7 is a schematic view showing a typical title list. In Fig. 7, "Program A," "Program B" and "Program C" are the titles attached to recorded TV programs and derived from EPG (Electronic Program Guide) data or the like. The "Program A," "Program B" and "Program C" are listed together with their recorded dates and times "10/20/06, 20:30," "10/25/06, 21:00" and "11/2/06, 02:00," respectively. The reproduction time of these recorded program is 60 minutes each.

In the title list, "Field Day," "Travel," "Wedding" and "Birthday" are the titles of photo movies. Camera-shaped icons 41 through 44 indicate that the moving picture contents whose titles are shown on the right-hand side of the icons are photo movies.

Of the photo movies titled "Field Day," "Travel," "Wedding" and "Birthday," those with the titles "Field Day," "Travel" and "Wedding" are listed together with automatic creation icons 51 through 53 shown on the right-hand side of the information about these three photo movies. The automatic creation icons 51 through 53 indicate that the photo movies whose information is displayed on the lefthand side of the icons are photo movies created automatically by the picture recording apparatus 1.

That is, in the example of Fig. 7, the photo movies titled "Field Day," "Travel" and "Wedding" are three days' photo movies created automatically by the picture recording apparatus 1. The photo movie with the title "Birthday" is listed as a photo movie created by the user who selected the folder and theme on his or her own initiative.

The automatic creation icons 51 through 53 thus displayed inform the user that photo movies have been automatically created.

The photo movie titled "Field Day" is shown to be created automatically at 4:00 on November 2, 2006. Because "Program C" was being recorded at 2:00 on the same day, the "Field Day" photo movie was created at 4:00, the other of the two creation timings previously established.

The photo movie titled "Travel" is shown to be created automatically at 2:00 on November 3, 2006. The photo movie with the title "Wedding" is listed as a photo movie created automatically at 2:00 on November 4, 2006.

The photo movie titled "Birthday" is shown to be created manually by the user at 17:00 on November 5, 2006. The reproduction time of each of the photo movies above is two minutes.

Suppose that with these photo movies recorded on the hard disk 20, another photo movie is created automatically on November 5. In that case, the oldest of the three photo movies "Field Day," "Travel" and "Wedding" created automatically up to November 4 is overwritten with the newly created photo movie (i.e., the "Field Day" photo movie created on November 2, the oldest of the photo movies, is replaced by the new one).

Illustratively, if the photo movie titled "Wedding" is set to be protected, then the automatic creation icon 53 is replaced by a protect icon 61. With the protect setting in place, the "Wedding" photo movie is protected against inadvertent or scheduled erasure.

The title list in Fig. 8 shows that the "Wedding" photo movie is set to be protected. In this case, a new photo movie automatically crated on November 5 is recorded without replacing the "Wedding" or any other photo movie. The reason is that with the picture recording apparatus 1 set to record a total of three automatically created photo movies except for protected photo movies, none of the existing photo movies needs to be overwritten with the newly created one.

Back in step S12 of Fig. 6, the display control section 34 checks to determine whether any one of the photo movies in the title list is selected and its reproduction designated by the user. The display control section 34 continues to have the title list displayed until photo movie reproduction is found to be designated.

If in step S12 photo movie reproduction is found designated, then step S 13 is reached. In step S 13, the display control section 34 reproduces the user-selected photo movie and causes the TV set 2 to output the reproduced pictures and sounds. When the photo movie is selected and its reproduction designated, the moving picture content management section 33 reads the designated photo movie from the hard disk 20 and feeds the retrieved movie to the display control section 34. The user is then presented with the photo movie being reproduced.

In the foregoing description, the automatically created photo movies were shown to be matched with the automatic creation icons 51 through 53 presented to the user in the title list. Alternatively, a display device attached to the enclosure of the picture recording apparatus 1 may be arranged to display character strings indicating that photo movies have been created automatically. As another alternative, the presence of a photo movie or movies may be signaled by LED (light emitting diode) illumination.

Immediately after the picture recording apparatus 1 is switched on by the user, a dialog may be displayed to indicate that photo movies have been automatically created. Reproduction of a photo movie may be started automatically as soon as the picture recording apparatus 1 is turned on. As another alternative, not icons but solely the information about a new photo movie created automatically may be highlighted in the title list.

In the foregoing description, the number of photo movies to be automatically created and recorded to the hard disk 20 is set to three in view of the capacity of the hard disk 20. However, alternative embodiments are not limited to three. A larger number of photo movies may be stored on the hard disk 20. Illustratively, the user may be allowed to set the number of photo movies that may be recorded on the hard disk 20.

In the foregoing description, the folder and theme for use in creating a photo movie were shown to be randomly selected. Alternatively, they may be selected according to a predetermined algorithm. For example, the still-frame pictures held in a given folder for use in creating a photo movie may be analyzed to see in what colors the pictures appear, whether people are photographed in the pictures, and what time each of the pictures was taken. According to the results of the analysis, an optimum theme may be selected for the pictures constituting the eventual photo movie.

The series of steps and processes described above may be executed either by hardware or by software. For the software-based processing to take place, the programs constituting the software may be either incorporated beforehand in dedicated hardware of the computer for program execution or installed upon use from a suitable program storage medium into a general-purpose personal computer or like equipment capable of executing diverse functions based on the installed programs.

As shown in Fig. 3, the storage medium carrying the programs to be installed into the computer for execution may be a package medium constituted by the memory card 23 or optical disk 25, or may be offered in the form of the ROM 12 or the hard disk 20 where the programs are stored temporarily or permanently.

In this specification, the steps which describe the programs involved represent the processes that may be performed parallelly or individually and not chronologically as well as the processes that are to be carried out in the depicted sequence (i.e., on a time series basis).

It should be understood by those skilled in the art that various modifications, combinations, sub-combinations and alterations may occur depending on design requirements and other factor in so far as they are within the scope of the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An information processing apparatus (1) comprising:
selection means (31) for managing a plurality of themes each associating a song with effects for a moving picture content, said selection means being configured to further select one of a plurality of folders each holding a plurality of still-frame pictures while concurrently selecting one of said themes at least at one of a plurality of timings established per day;
creation means (32) for creating a moving picture content to be displayed consecutively as the still-frame pictures from the folder selected by said selection means and accompanied by the effects and the song associated with the theme also selected by said selection means, the selected song serving as background music to be played during the display;
recording means (20) for recording said moving picture content created by said creation means along with other moving picture contents; and
display control means (34) for displaying information including an icon indicating that said moving picture content is created automatically, said icon being part of the information in list form about the moving picture contents created by said creation means and recorded by said recording means.

2. The information processing apparatus (1) according to claim 1, wherein, with said information processing apparatus (1) placed in a standby state, said selection means (31) being configured to select one of said plurality of themes and one of said plurality of folders at one of said plurality of timings.

3. The information processing apparatus according to claim 1, wherein, if said recording means (20) is set to record a predetermined number of the moving picture contents created by said creation means up to the preceding day, then said recording means being configured to overwrite the oldest of the recorded moving picture contents with said moving picture content created anew by said creation means.

4. An information processing method comprising the steps of:
managing a plurality of themes each associating a song with effects for a moving picture content, said managing step further selecting one of a plurality of folders each holding a plurality of still-frame pictures while concurrently selecting one of said themes at least at one of a plurality of timings established per day;
creating (S5) a moving picture content to be displayed consecutively as the still-frame pictures from the selected folder and accompanied by the effects and the song associated with the selected theme, the selected song serving as background music to be played during the display;
recording (S6) said moving picture content created in said creating step along with other moving picture contents; and
displaying (S11) information including an icon indicating that said moving picture content is created automatically, said icon being part of the information in list form about the moving picture contents created in said creating step and recorded in said recording step.

5. A program for causing a computer to execute a procedure comprising the steps of:
managing a plurality of themes each associating a song with effects for a moving picture content, said managing step further selecting one of a plurality of folders each holding a plurality of still-frame pictures while concurrently selecting one of said themes at least at one of a plurality of timings established per day;
creating (S5) a moving picture content to be displayed consecutively as the still-frame pictures from the selected folder and accompanied by the effects and the song associated with the selected theme, the selected song serving as background music to be played during the display;
recording (S6) said moving picture content created in said creating step along with other moving picture contents; and
displaying (S11) information including an icon indicating that said moving picture content is created automatically, said icon being part of the information in list form about the moving picture contents created in said creating step and recorded in said recording step.

## Patentansprüche

1. Informationsverarbeitungsvorrichtung (1), umfassend:
eine Auswahleinrichtung (31) zum Verwalten einer Mehrzahl von Themen, deren jedes ein Lied mit Effekten für einen Bewegtbildinhalt verbindet, wobei die Auswahleinrichtung konfiguriert ist, um ferner einen Ordner aus einer Mehrzahl von Ordnern auszuwählen, deren jeder eine Mehrzahl von Standvollbildern enthält, während gleichzeitig eines der Themen zumindest zu einem Zeitpunkt aus einer Mehrzahl von pro Tag festgelegten Zeitpunkten ausgewählt wird;
eine Erzeugungseinrichtung (32) zum Erzeugen eines Bewegtbildinhalts, der aufeinanderfolgend als Standvollbilder aus dem durch die Auswahleinrichtung ausgewählten Ordner anzuzeigen ist und der von den Effekten und dem Lied begleitet wird, welches mit dem Thema verbunden ist, das ebenfalls durch die Auswahleinrichtung ausgewählt ist, wobei das ausgewählte Lied als Hintergrundmusik dient, die während der Wiedergabe wiederzugeben ist;
eine Aufzeichnungseinrichtung (20) zum Aufzeichnen des durch die Erzeugungseinrichtung erzeugten Bewegtbildinhalts zusammen mit anderen Bewegtbildinhalten;
und eine Anzeige-Steuereinrichtung (34) zum Anzeigen einer Information, die ein Bildsymbol bzw. Icon enthält, welches anzeigt, dass der Bewegtbildinhalt automatisch erzeugt wird, wobei das Bildsymbol Teil der Information in Listenform über die Bewegtbildinhalte ist, welche durch die Erzeugungseinrichtung erzeugt und durch die Aufzeichnungseinrichtung aufgezeichnet sind.

2. Informationsverarbeitungsvorrichtung (1) nach Anspruch 1, wobei in dem Fall, dass die Informationsverarbeitungsvorrichtung (1) in einen Bereitschafts- bzw. Standby-Zustand eingestellt ist, die Auswahleinrichtung (31) konfiguriert ist, um ein Thema aus der Mehrzahl von Themen und einen Ordner aus der Mehrzahl von Ordnern zu einem Zeitpunkt aus der Mehrzahl von Zeitpunkten auszuwählen.

3. Informationsverarbeitungsvorrichtung nach Anspruch 1, wobei in dem Fall, dass die Aufzeichnungseinrichtung (20) zum Aufzeichnen einer bestimmten Anzahl von Bewegtbildinhalten eingestellt ist, welche durch die Erzeugungseinrichtung bis zum vorhergehenden Tag erzeugt sind, die Aufzeichnungseinrichtung sodann konfiguriert ist, um den ältesten der aufgezeichneten Bewegtbildinhalte mit dem Bewegtbildinhalt zu überschreiben, der durch die Erzeugungseinrichtung neuerlich erzeugt ist.

4. Informationsverarbeitungsverfahren, umfassend die Schritte:
Verwalten einer Mehrzahl von Themen, deren jedes ein Lied mit Effekten für einen Bewegtbildinhalt verbindet, wobei bei dem Verwaltungsschritt ferner ein Ordner aus einer Mehrzahl von Ordnern ausgewählt wird, deren jeder eine Mehrzahl von Standvollbildern enthält, während gleichzeitig eines der Themen zumindest zu einem Zeitpunkt aus einer Mehrzahl von pro Tag festgelegten Zeitpunkten ausgewählt wird; Erzeugen (S5) eines Bewegtbildinhalts, der aufeinanderfolgend als Standvollbilder aus dem ausgewählten Ordner anzuzeigen ist und der begleitet wird von den Effekten und von dem mit dem ausgewählten Thema verbundenen Lied, wobei das ausgewählte Lied als Hintergrundmusik dient, die während der Anzeige wiederzugeben ist; Aufzeichnen (S6) des bei dem Erzeugungsschritt erzeugten Bewegtbildinhalts zusammen mit anderen Bewegtbildinhalten;
und Anzeigen (S11) einer Information, die ein Bildsymbol bzw. Icon enthält, welches anzeigt, dass der Bewegtbildinhalt automatisch erzeugt wird, wobei das Bildsymbol Teil der Information in Listenform über die Bewegtbildinhalte ist, welche bei dem Erzeugungsschritt erzeugt und bei dem Aufzeichnungsschritt aufgezeichnet sind.

5. Programm, welches einen Computer veranlasst, eine Prozedur auszuführen, umfassend die Schritte:
Verwalten einer Mehrzahl von Themen, deren jedes ein Lied mit Effekten für einen Bewegtbildinhalt verbindet, wobei bei dem Verwaltungsschritt ferner ein Ordner aus einer Mehrzahl von Ordnern ausgewählt wird, deren jeder eine Mehrzahl von Standvollbildern enthält, während gleichzeitig eines der Themen zumindest zu einem Zeitpunkt aus einer Mehrzahl von pro Tag festgelegten Zeitpunkten ausgewählt wird; Erzeugen (S5) eines Bewegtbildinhalts, der aufeinanderfolgend als Standvollbilder aus dem ausgewählten Ordner anzuzeigen ist und der begleitet wird von den Effekten und von dem mit dem ausgewählten Thema verbundenen Lied, wobei das ausgewählte Lied als Hintergrundmusik dient, die während der Anzeige wiederzugeben ist; Aufzeichnen (S6) des bei dem Erzeugungsschritt erzeugten Bewegtbildinhalts zusammen mit anderen Bewegtbildinhalten;
und Anzeigen (S11) einer Information, die ein Bildsymbol bzw. Icon enthält, welches anzeigt, dass der Bewegtbildinhalt automatisch erzeugt wird, wobei das Bildsymbol Teil der Information in Listenform über die Bewegtbildinhalte ist, welche bei dem Erzeugungsschritt erzeugt und bei dem Aufzeichnungsschritt aufgezeichnet sind.

## Revendications

1. Appareil de traitement d'informations (1) comportant :
un moyen de sélection (31) pour gérer une pluralité de thèmes chacun associant une chanson à des effets pour un contenu d'images animées, ledit moyen de sélection étant configuré pour en outre sélectionner l'un d'une pluralité de classeurs chacun conservant une pluralité d'images fixes tout en sélectionnant concurremment l'un desdits thèmes à au moins l'un d'une pluralité de temps établis par jour ;
un moyen de création (32) pour créer un contenu d'images animées à afficher de façon consécutive comme les images fixes provenant du classeur sélectionné par ledit moyen de sélection et accompagnés par les effets et la chanson associée au thème également sélectionné par ledit moyen de sélection, la chanson sélectionnée servant de musique d'ambiance à jouer pendant l'affichage ;
un moyen d'enregistrement (20) pour enregistrer ledit contenu d'images animées créé par ledit moyen de création conjointement avec les autres contenus d'images animées ; et
un moyen de contrôle d'affichage (34) pour afficher une information comprenant une icône indiquant que ledit contenu d'images animées est créé automatiquement, ladite icône étant une partie de l'information sous forme de liste concernant les contenus d'images animées créés par ledit moyen de création et enregistrés par ledit moyen d'enregistrement.

2. Appareil de traitement d'informations (1) selon la revendication 1, dans lequel, lorsque ledit appareil de traitement d'informations (1) est placé dans un état d'attente, ledit moyen de sélection (31) est configuré pour sélectionner l'un de ladite pluralité de thèmes et l'un de ladite pluralité de classeurs à l'un de ladite pluralité de temps.

3. Appareil de traitement d'informations selon la revendication 1, dans lequel, si ledit moyen d'enregistrement (20) est déterminé pour enregistrer un nombre prédéterminé de contenus d'images animées créés par ledit moyen de création jusqu'au jour précédent, alors ledit moyen d'enregistrement est configuré pour écraser le plus ancien des contenus d'images animées enregistrés, ledit nouveau contenu d'images animées étant créé par ledit moyen de création.

4. Procédé de traitement d'informations comportant les étapes consistant à :
gérer une pluralité de thèmes chacun associant une chanson à des effets pour un contenu d'images animées, ladite étape de gestion sélectionnant en outre l'un d'une pluralité de classeurs contenant chacun une pluralité d'images fixes tout en sélectionnant concurremment l'un desdits thèmes au moins à l'un d'une pluralité de temps établis par jour ;
créer (S5) un contenu d'images animées à afficher de façon consécutive en tant qu'images fixes provenant du classeur sélectionné et accompagné par les effets et la chanson associée au thème sélectionné, la chanson sélectionnée servant de musique d'ambiance à jouer pendant l'affichage ;
enregistrer (S6) ledit contenu d'images animées créé lors de ladite étape de création conjointement avec d'autres contenus d'images animées ; et
afficher (S11) l'information comprenant une icône indiquant que ledit contenu d'images animées est créé automatiquement, ladite icône étant une partie de l'information sous forme de liste concernant les contenus d'images animées créés lors de ladite étape de création et enregistrés lors de ladite étape d'enregistrement.

5. Programme amenant un ordinateur à exécuter une procédure comportant les étapes consistant à :
gérer une pluralité de thèmes chacun associant une chanson à des effets pour un contenu d'images animées, ladite étape de gestion sélectionnant en outre l'un d'une pluralité de classeurs comportant chacun une pluralité d'images fixes tout en sélectionnant concurremment l'un desdits thèmes à au moins l'un d'une pluralité de temps établis par jour ;
créer (S5) un contenu d'images animées à afficher de façon consécutive en tant qu'images fixes provenant du classeur sélectionné et accompagnées par les effets et la chanson associée au thème sélectionné, la chanson sélectionnée servant de musique d'ambiance à jouer pendant l'affichage ;
enregistrer (S6) ledit contenu d'images animées créé lors de ladite étape de création conjointement avec d'autres contenus d'images animées ; et
afficher (S11) une information comprenant une icône indiquant que ledit contenu d'images animées est crée automatiquement, ladite icône étant une partie de l'information sous forme de liste concernant les contenus d'images animées créés lors de l'étape de création et enregistrés lors de l'étape d'enregistrement.
